# EUROPEAN PATENT SPECIFICATION

(11) **EP 1 652 618 B1**
(45) Date of publication and mention of the grant of the patent: **04.07.2007**
(21) Application number: 05256658.5
(22) Date of filing: 27.10.2005
(51) Int. Cl.: B23Q 1/58, B23Q 7/14

(54) **Clamping mechanism for pallet changer**
Klemmvorrichtung für einen Palettenwechsler
Dispositif de serrage pour un changeur de palettes

(30) Priority: 29.10.2004 JP 2004316386
(43) Date of publication of application: 03.05.2006
(73) Proprietor: FANUC LTD, Minamitsuru-gun, Yamanashi 401-0597 (JP)
(72) Inventor: Funakoshi, Akira Room-14-406,Fanuc Manshonharimomi, Minamitsuru-gun Yamanashi 401-0511 (JP); Fujimoto, Akihiko Room 6-109,Fanuc Manshonharimomi, Minamitsuru-gun Yamanashi 401-0511 (JP)
(74) Representative: Billington, Lawrence Emlyn

(56) References cited:
- CH-A5- 688 766
- DE-A1- 3 713 022
- DE-A1- 10 249 241
- US-A- 5 018 617

## Description

The present invention relates to a machine tool comprising a clamping mechanism for a pallet carrying a workpiece.

With automation of machine tools, in mounting a workpiece on a work table and removing the workpiece after machining, a pallet changer is used that changes the workpiece on the work table using a pallet on which the workpiece is mounted.

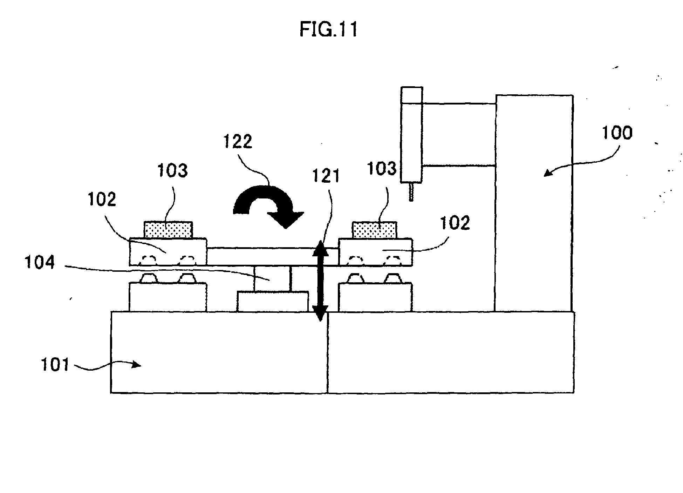

FIG. 11 is a diagram illustrating one example of the configuration of a conventional pallet changer. A pallet changer 101 is attached to a machine tool 100, with a plurality of pallets 102 rotatably supported on an elevator 104. In such a pallet changer 101, when changing the pallets 102, after the workpiece 103 is placed on the pallet 102 and the elevator 104 lifts the pallet 102 upward (in the direction indicated by arrow 121 in the diagram), the elevator 104 then rotates the pallet 102 (in the direction indicated by arrow 122) so as to move the workpiece 103 to a machining position of the machine tool 100. As a pallet changer of this type, those taught by JP 61-131844A and JP 5-85307B, for example, are known.

As described above, the conventional rotary type pallet changer lifts the pallet up when changing pallets and then lowers the pallet into place after rotation, and thus requires an elevator to raise and lower the workpiece-mounting pallet. As a result, the pallet changer requires both the vertical space in which to be able to raise and lower the pallet and the horizontal space in which to be able to rotate the pallet, thus necessitating a large area in which to change pallets.

In addition, the conventional rotary type pallet changer requires drive mechanisms to move the pallet in two different directions of motion, vertically and rotationally, and thus requires a large number of components, which in turn increases the cost of the pallet changer.

There is disclosed in US-A-5,018,617 a machine tool according to the preamble of attached claim 1, wherein the clamping means for clamping/unclamping a workpiece-mounting pallet to the work table of the machine tool comprises a specifically-provided hydraulic mechanism for that purpose.

According to the present invention there is provided a machine tool comprising a work table, the machine tool being cooperable with a pallet changer for changing workpiece-mounting pallets, such that a workpiece-mounting pallet can be conveyed from such pallet changer to the work table in the same plane as the work table, the work table comprising: supporting means arranged for supporting a workpiece-mounting pallet in a direction of conveying a workpiece-mounting pallet to and from the work table; and clamping means for clamping/unclamping a workpiece-mounting pallet in the direction of conveying the workpiece-mounting pallet when supported by said supporting means; characterised in that the clamping means is such that a workpiece-mounting pallet will be unclamped from the work table by utilizing a drive force of a driving mechanism, of the machine tool, provided for axially moving the work table.

With the above arrangement, the changing of a workpiece-mounting pallet can be accomplished simply by moving the pallet solely in a straight line, thus enabling the space required for changing the pallet to be reduced. Furthermore, such movement in the direction of a straight line is the same as the movement of the workpiece-mounting pallet in the direction of delivery to and removal from the work table, and since the pallet is moved in the same plane as the work table of the machine tool, the present invention does not require space other than that needed for the delivery and removal of the workpiece-mounting pallet to and from the machine tool work table, thus enabling the space required for changing of the pallet to be reduced to a minimum.

The workpiece-mounting pallet is unclamped by utilizing a drive force of a driving mechanism of the machine tool provided for axially moving the work table. A separate drive source is not required by utilizing the drive force of the driving mechanism which is provided in the machine tool as a drive source for an unclamping operation of the clamping mechanism, enabling the structure of the mechanism to be simplified.

The clamping means can be a clamping mechanism comprising: a cylindrical case; a sleeve slidably supported in the cylindrical case; an eject bar arranged inside of the sleeve and movable with the sleeve; an elastic member generating an elastic force for urging the eject bar and the sleeve with respect to the cylindrical case in a direction of conveying the workpiece-mounting pallet to the work table; and balls arranged movable radially of the cylindrical case to be in contact with an inner peripheral portion of the sleeve, wherein the sleeve slides in the cylindrical case by the elastic force of the elastic member such that the balls are moved radially inward of the cylindrical case to retain a pull stud provided on the workpiece-mounting pallet to be unmovable in the direction of conveying the workpiece-mounting pallet to/from the work table, thereby the workpiece-mounting pallet is clamped on the work table. With this arrangement, the elastic member provides a clamping force for clamping the workpiece-mounting pallet on the work table, thus enabling the structure of the mechanism to be simplified.

The clamping mechanism may further comprise a drive mechanism for moving the eject bar with respect to the cylindrical case in a direction of conveying the workpiece-mounting pallet from the work table by utilizing movement of the work table, wherein the drive mechanism moves the eject bar to press the pull stud of the workpiece-mounting pallet in the direction of conveying the workpiece-mounting pallet from the work table against the urging force of the elastic member so that the workpiece-mounting pallet is unclamped.

The cylindrical case may have a female taper with an inner diameter thereof increasing toward outside at one end confronting the pull stud of the workpiece-mounting pallet so that a tapered cone having the pull stud at a distal end thereof is fitted into the female taper. With this configuration, a position detector for positioning of the pallet or a specific mechanism for fixing the pallet in place are rendered unnecessary.

Accordingly, a pallet changer clamping mechanism of the present embodiment, by using a configuration that clamps the pallet in the direction of delivery and removal in the interior of the machine tool and that uses the drive force provided by the machine tool to provide the necessary force to clamp and unclamp the pallet, reduces the amount of space needed to change a pallet to a compact space, and does so using a simple apparatus that reduces the motion needed to change pallets.

In addition, the pallet changer clamping mechanism of the present embodiment renders an elevator for raising and lowering the pallet, as in the conventional pallet changer, unnecessary.

The present embodiment can clamp a pallet without an elevator for raising and lowering the workpiece-mounting pallet, enabling the drive means structure to be compact and simple.

In addition, the clamp/unclamp mechanism uses the drive force of the axis movement provided in the machine tool itself, thereby eliminating the need for a dedicated drive source for clamping and unclamping and thus enabling the clamp structure to be implemented inexpensively.

### BRIEF DESCRIPTION OF THE DRAWINGS

FIG. 1 is a diagram illustrating a general configuration of a machine tool, with a pallet changer, of the present invention;
FIG. 2 is a diagram illustrating a layout of the clamping mechanism of FIG. 1;
FIG. 3 is a cross-sectional view illustrating one configuration of the clamping mechanism of FIG. 1;
FIG. 4 is a flow chart illustrating a clamping action of the embodiment of FIG. 1;
FIG. 5 is a flow chart illustrating an unclamping action of the embodiment of FIG. 1;
FIG. 6 is a cross-sectional view illustrating a clamping action of FIG 1;
FIG. 7 is a cross-sectional view illustrating the clamping action of FIG 1;
FIG. 8 is a cross-sectional view illustrating the clamping action of FIG 1;
FIG. 9 is a cross-sectional view illustrating the clamping action of FIG 1;
FIG. 10 is a cross-sectional view illustrating the unclamping action of FIG 1; and
FIG. 11 is a diagram illustrating one example of the configuration of a conventional pallet changer.

### DETAILED DESCRIPTION

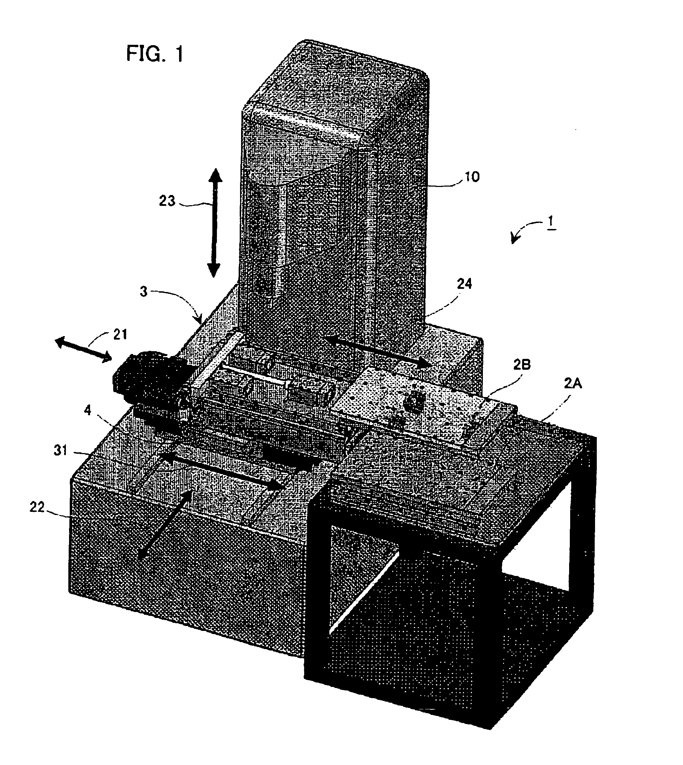

FIG. 1 is a diagram illustrating a general configuration of a clamping mechanism for a pallet changer which is applied to a machine tool according to the present invention.

In FIG. 1, a pallet changer 1 changes workpiece-mounting pallets 2A, 2B on a work table 4 of a machine tool 10. The workpieces that are the objects of machining, not shown, are mounted on a top surface of each of the workpiece-mounting pallets 2A, 2B at a location remote from the machining part in the machine tool 10. The workpieces mounted on the workpiece-mounting pallets 2A, 2B are delivered to the machining part of the machine tool 10 by the pallet changer 1 and then machined.

In addition, the finished workpiece is removed from the machining part to a location removed from the machining part inside the machine tool 10 or to the exterior of the machine tool 10 by the pallet changer 1.

By this changing of the workpiece-mounting pallets 2A, 2B by the pallet changer 1, workpieces are delivered to and removed from the machining part of the machine tool 10.

In FIG. 1, the machine tool 10 is equipped with drive mechanisms that drive the work table 4 in the direction of the X axis 21 and in the direction of the Y axis 22, and a drive mechanism that drives the machining head in the direction of the Z axis, with the workpiece placed on the work table 4 machined by being driven along each of these axes.

In the example shown in FIG. 1, the pallet changer 1 moves freely in the direction of the X axis 21, and the X axis 21 is the direction in which the workpiece-mounting pallet 2 is conveyed to be delivered to and removed from the work table 4.

It should be noted that the direction of delivery and removal 24 of the workpiece-mounting pallet 2 is not limited to the X axis as shown in the example shown in diagram, and may be the Y axis or some other axis. If the direction of delivery and removal is made to be each of the X axis, Y axis and Z axis, then drive mechanisms on the machine tool 10 for each of the directions X, Y and Z can be used for the drive mechanisms for delivering and removing the pallets. If the direction of delivery and removal of the pallets is some other direction besides the X, Y and Z axes, then the system may be configured so as to combine a plurality of axial drive mechanisms.

In order to move either the workpiece-mounting pallet 2A or the workpiece-mounting pallet 2B that has been delivered to and placed on the work table 4 of the machine tool 10, it is necessary to fix the workpiece-mounting pallet on the work table 4. The clamping mechanism 3 is a mechanism for fixing the workpiece-mounting pallet on the work table 4 and releasing it from the work table 4. The workpiece-mounting pallet is fixed in place on the work table 4 by the clamping action of the clamping mechanism 3, and the fixed pallet is released from the work table 4 by the unclamping action of the clamping mechanism 3.

The clamping mechanism 3 repeats the clamping action and the unclamping action and multiple workpieces are delivered to the machine tool machining position and machined, after which the finished workpieces are then removed.

The clamping operation of the clamping mechanism 3 can use the axial direction drive force of the machine tool 10 (in FIG. 1, the X-axis drive force 31). Therefore, in addition to the basic matter of the movement of the work table 4 as directed by the machine tool, the machine tool axial drive force is also used to deliver the workpiece-mounting pallets 2A, 2B as well as to clamp and unclamp the workpiece-mounting pallet 2A or 2B to and from the work table 4.

It should be noted that the action of delivering the workpiece-mounting pallet to the work table 4 can be carried out by a drive mechanism, not shown, or manually. The drive mechanism for carrying out this delivery action may be constituted separately from the machine tool 10, and moreover, it may utilize the drive force of each axis of the machine tool 10. In addition, the action of delivering the workpiece-mounting pallet to the work table 4 may be accomplished using a single axial drive force or a combination of multiple axial drive forces.

In FIG. 1, the workpiece-mounting pallets 2A, 2B are placed on a pallet stand 6 disposed adjacent to the machine tool 10, and a configuration is shown in which the workpiece-mounting pallet selected from between the workpiece-mounting pallets 2A, 2B (in FIG. 1, pallet 2B) is delivered along a horizontal movement support member guide for delivery. Alternatively, a drive mechanism that delivers the workpiece-mounting pallet that is selected to the machine tool 10 may be provided separately.

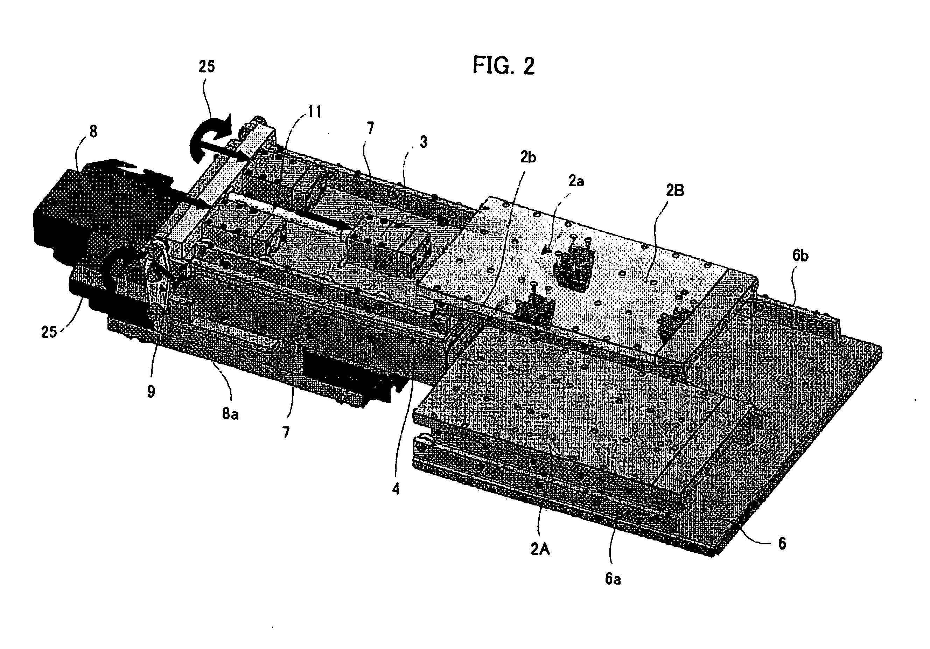

FIG. 2 illustrates the layout of the clamping mechanism of the present invention.

In FIG. 2, the clamping mechanism 3 and the workpiece-mounting pallets 2A, 2B are shown. The clamping mechanism 3 delivers and removes the workpiece-mounting pallets 2A, 2B to and from the work table 4 in the same direction in which it clamps and unclamps the workpiece-mounting pallets 2A, 2B to and from the work table 4, with the clamping and unclamping of the workpiece-mounting pallets 2A, 2B to and from the work table 4 performed on the same surface as that of the machine tool work table 4.

In the embodiment shown in FIG. 2, the clamping mechanism 3 and the horizontal movement support members 7 are mounted on the top surface of the work table 4. The work table 4 itself is moved in the axial direction (in the direction of the X axis) by an axial drive mechanism installed in the machine tool. It should be noted that although three of the clamping mechanisms 3 are shown in FIG. 2, any number of clamping mechanisms may be mounted.

The horizontal movement support members 7 provided on the sides of the work table 4 engage horizontal movement support members 6a provided on the pallet stand 6 so as to slidably support horizontal movement of the workpiece-mounting pallets 2A, 2B.

A saddle 8 is a member that supports the work table 4. The saddle 8 moves in the direction of the Y axis in the machine tool, by which it can move the work table 4 in the Y axis direction. Dogs 8a (only one of which is shown in FIG. 2) are mounted on both sides of the saddle 8 and rotating levers 9 are mounted on both sides of the work table 4, in such a way that one end of the rotating levers 9 is capable of contacting the dogs 8a.

When the work table 4 moves along the X axis (to the right in the diagram), one end of the rotating levers 9 contacts the dogs 8a. This contact causes the rotating levers 9 to rotate about their axes of rotation in the direction indicated by arrow 25 in the diagram. With this rotation, the other edge of the rotating levers 9 causes a rod 11 to move in the X axis direction (to the right in the diagram). This movement cause the rod 11 to act on an eject bar inside the clamping mechanisms 3, such that the drive force of the work table 4 is converted into a force that unclamps the clamped workpiece-mounting pallet.

A tapered member 2a, on top of which one or more workpieces are mounted and which is provided on the bottom thereof with pull studs (not shown in FIG. 2) for clamping to the clamping mechanism 3, are mounted on the workpiece-mounting pallets 2A, 2B.

It should be noted that, in FIG. 2, the tapered member 2a is equipped with three pull studs, corresponding to each of the three clamping mechanisms 3 provided on the work table 4, and can be positioned when clamping depending on the number and the location of the tapered portions 2a and clamping mechanisms 3.

The workpiece-mounting pallets 2A, 2B are supported by the horizontal movement support members 7, and move horizontally between the work table 4 and the pallet stand 6 in the same plane. The workpiece-mounting pallets 2A, 2B are delivered to the work table 4, the pull stud-equipped tapered portions 2a are aligned with the clamping mechanisms 3 and then clamped by the clamping mechanisms 3. This clamping action fixes the workpiece on the work table 4 so that the workpiece can be machined by the machine tool.

After machining is completed, the clamping mechanisms 3 are unclamped and the workpiece-mounting pallet is released and removed to the pallet stand 6 while being supported by the horizontal movement support members 7.

It should be noted that the horizontal movement support members 7 may, for example, be configured as a combination of guide rails and rollers, or may be some other configuration.

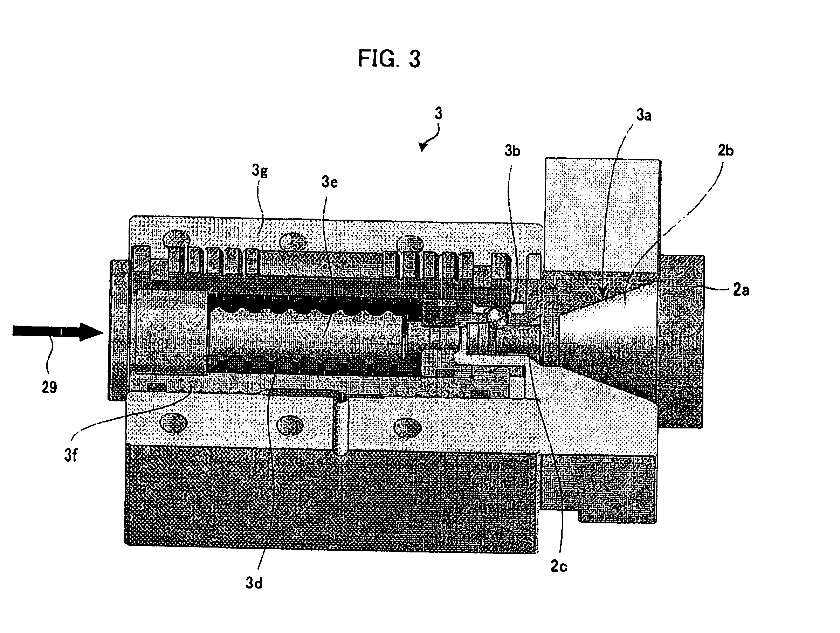

Next, a description is given of a configuration of the clamping mechanism 3, using the cross-sectional view shown in FIG. 3. The clamping mechanism 3 is comprised of a cylindrical case 3g, a sleeve 3f slidably supported with respect to the cylindrical case 3g, an eject bar 3e provided on the inside of the sleeve 3f and coupled to the sleeve 3, a spring member 3d that urges the eject bar 3e and the sleeve 3f in the direction of delivery of the workpiece-mounting pallet 2, and balls 3b supported so as to be movable toward the central axis of the clamping mechanism inside the sleeve 3f.

The spring member 3d is a compression spring, and the elastic force of the spring member 3d as it tries to return to its original shape urges the sleeve 3f in the direction of conveying the workpiece-mounting pallet 2 to be delivered to the work table 4 (to the left in the figure). The movement of the sleeve 3f as urged by the spring member 3d moves the balls 3b in the direction of the central axis of the cylindrical case 3g so as to retain the pull studs 2c of the workpiece-mounting pallet 2 as well as apply a clamping force in the direction of delivery of the workpiece-mounting pallet to the pull stud 2c.

On an end disposed toward the workpiece-mounting pallet, the cylindrical case 3g of the clamping mechanism 3 is provided with a female taper 3a whose interior diameter widens toward the outside from a position of insertion of the pull stud 2c. By contrast, the pull stud-equipped tapered member 2a is provided with a tapered cone 2b whose outer diameter narrows toward the tip of the pull stud 2c. The inclined surface of the female taper 3a and the inclined surface of the tapered cone 2b are formed to the same angle of inclination, so as to enable the tapered cone 2b to be inserted into the female taper 3a. By the engagement of the tapered cone 2b with the female taper 3a, the clamping mechanism 3 and the pallet 2 position the workpiece-mounting pallet.

The positioning of the workpiece-mounting pallet 2 aligns the tip of the pull stud 2c with a clamping position located at the position of the clamping mechanism 3 balls 3b.

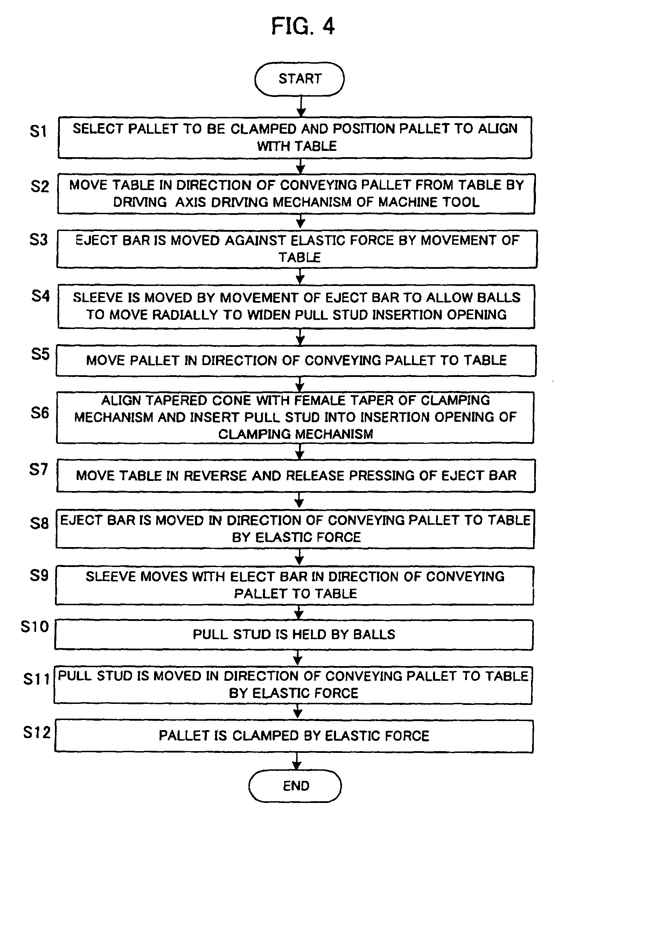

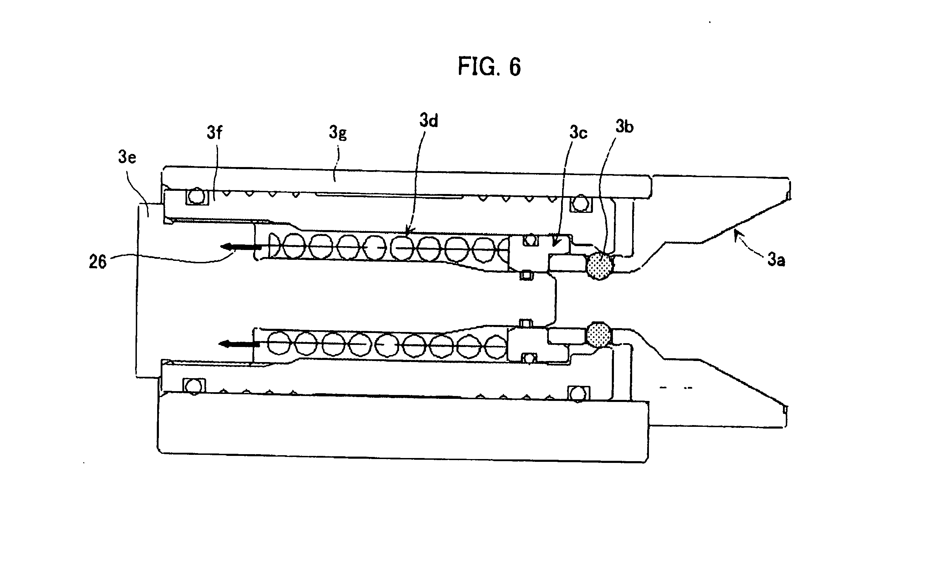

A description is now given of the clamping action and the unclamping action of the clamping mechanism 3 of the present invention, using the flow chart shown in FIG. 4 and the cross-sectional views presented in FIGS. 6-10.

First, a description is given of the clamping action, using the flow chart shown in FIG. 4 and FIGS. 6-9. It should be noted that, in an initial state, the workpiece-mounting pallet 2 is not mounted on the clamping mechanism 3.

From among a plurality of prepared workpiece-mounting pallets, a workpiece-mounting pallet 2 on which is mounted a workpiece to be machined by the machine tool is selected and positioned to be aligned with the machine tool work table. It should be noted that the alignment of the workpiece-mounting pallet 2 may be accomplished automatically by a separately supplied mechanism (Step S1).

FIG. 6 shows the initial state, in which a clamping action has not been carried out by the clamping mechanism. In this initial state, the restitutive force 26 of the spring member 3d urges the sleeve 3f and the eject bar e3 to move to the left in the diagram. It should be noted that one end of the spring member 3d is supported by the female taper 3a member and the cylindrical case 3g via a flange 3c and the balls 3b.

In order to clamp the pull stud 2c when clamping, the end of the sleeve 3f disposed toward the balls 3b side is provided with a projecting portion that projects toward the central axis of the clamping mechanism 3, which projects the balls 3b toward the central axis so as to grasp a portion of lesser diameter of an inserted pull stud 2c and clamp it.

In this initial state, since the balls 3b are projected toward the central axis by the projecting portion of the sleeve 3f, the pull stud 2c of an inserted workpiece-mounting pallet 2 are prevented from moving to a clamping position by the balls 3b.

Accordingly, the machine tool axis is driven so as to move the work table 4. As described using FIG. 2, when the work table 4 is moved, one end of the rotating levers 9 contacts the dogs 8a fixed on the saddle 8 and the rotating levers 9 rotate, pushing the rod 11 (Step S2).

The rod 11 pushes the eject bar 3e toward the workpiece-mounting pallet, against the elastic force of the spring member 3d (Step S3).

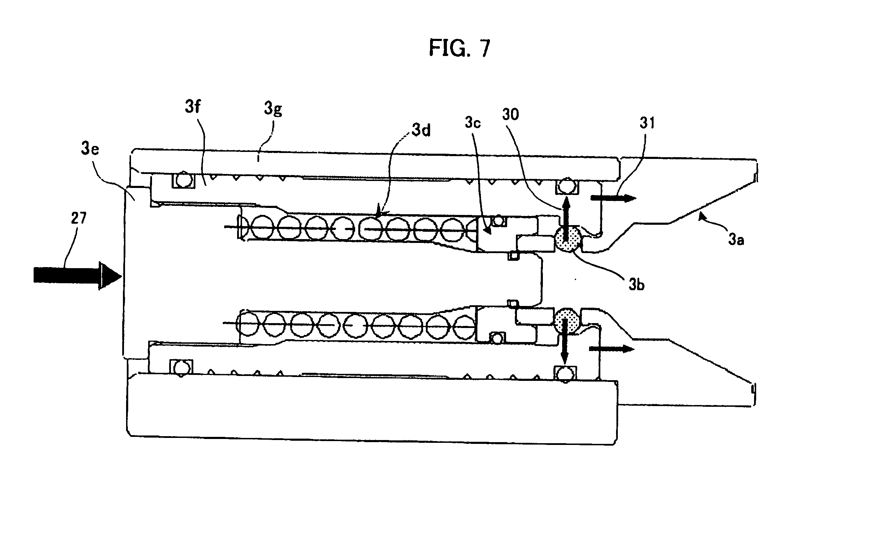

FIG. 7 shows a state in which the eject bar 3e has been moved. As the eject bar 3 moves (as indicated by arrow 27 in the diagram) the sleeve 3f also moves. The movement of the sleeve 3f (in the direction indicated by arrows 31) moves the projecting portion of the sleeve 3f away from the balls 3b, thus enabling the balls 3b to move in a direction 30 away from the central axis, widening the inner diameter of an opening into which the pull stud 2c is inserted and removed and thus enabling the pull stud 2c to be inserted to the clamping position. The foregoing action enables the workpiece-mounting pallet to be moved from an initial state to a state in which it can be clamped (Step S4).

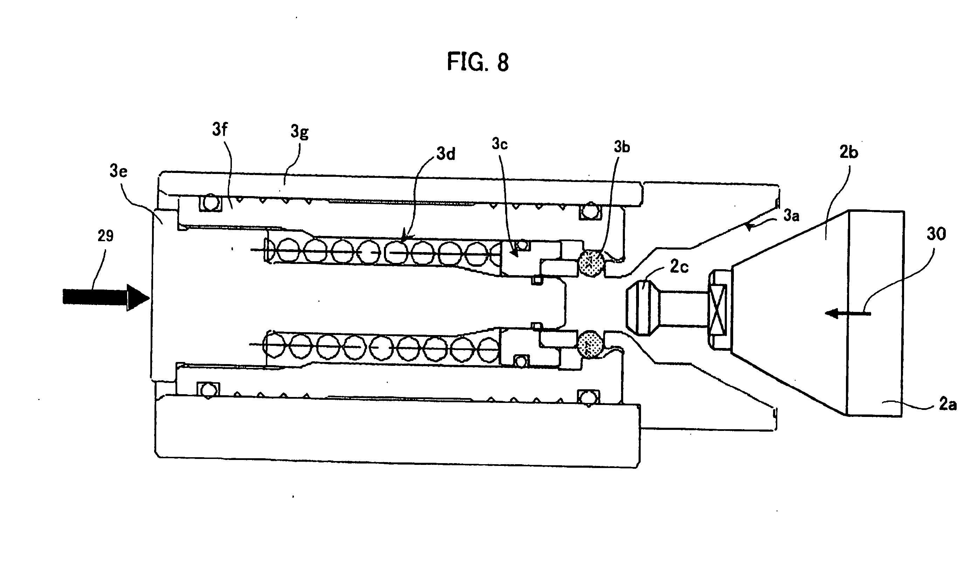

Next, the workpiece-mounting pallet 2 is moved in the direction of delivery. FIG. 8 shows the state of delivery of the workpiece-mounting pallet 2. In a state in which the eject bar 3e pushed by the driving force of the rod 11 caused by the movement of the work table 4 (the direction indicated by arrow 29 in the diagram), the workpiece-mounting pallet 2 is moved in the direction of delivery (to the left in the diagram) (Step S5).

In the delivery of the workpiece-mounting pallet 2, the engagement of the tapered cone 2b with the female taper 3a of the clamping mechanism 3 inserts the pull stud 2c into the opening in the clamping mechanism 3 into which the pull studs 2c are inserted and removed, thus aligning the pull stud 2c with a clamping position (Step S6).

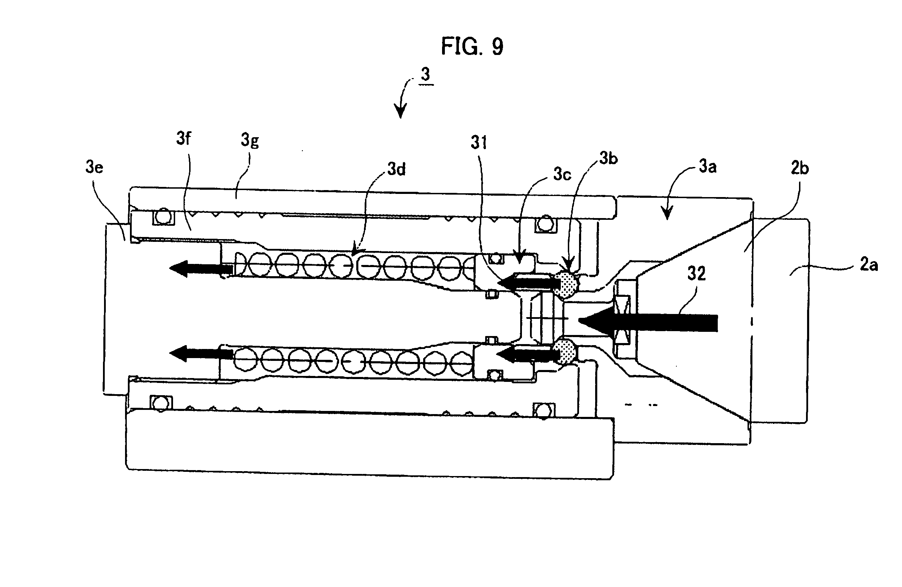

FIG. 9 illustrates a clamped state. After alignment is completed, when the work table 4 is moved in reverse and the pressing of the rotating levers 9 against the eject bar 3e through the rod 11 is released (Step S7). When the pressing of the rotating levers 9 on the eject bar 3e through the rod 11 is released, the eject bar 3e is moved in reverse by the elastic force 31 of the spring member 3d, that is, in the direction of delivery of the workpiece-mounting pallet 2 (Step S8). As the eject bar 3e moves in reverse, the sleeve 3f moves in the direction of delivery of the workpiece-mounting pallet 2 (Step S9).

The movement of the sleeve 3f in the direction of delivery of the workpiece-mounting pallet 2 causes the projecting portion of the sleeve 3f to contact the balls 3b, thus causing the balls 3b to move toward the central axis, where they enter into and engage the portion of lesser diameter of the pull studs 2c so as to retain the pull studs 2c (Step S10).

Furthermore, the pull studs 2c held in place by the elastic force 31 of the spring member 3d are moved in the direction of delivery (Step S11) and the workpiece-mounting pallet is clamped. Reference numeral 32 in the diagram shows a clamping force exerted against the taper cone 2b by the elastic force 31 of the spring member 3d (Step S12).

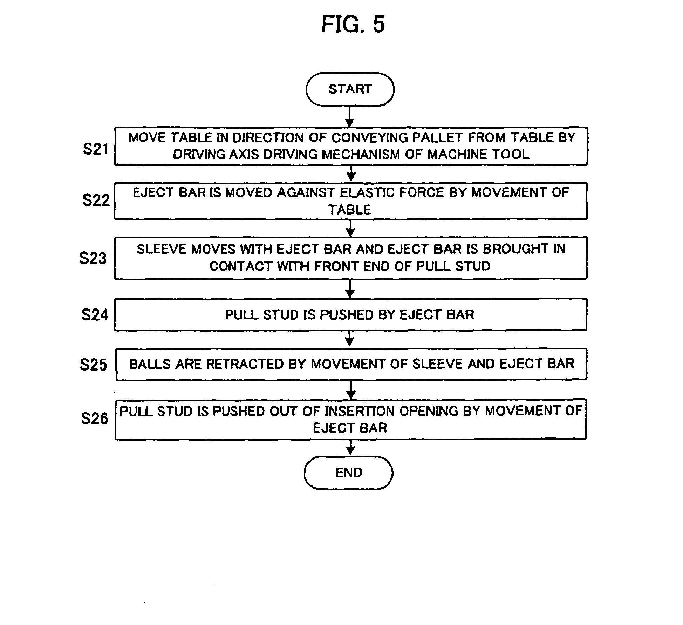

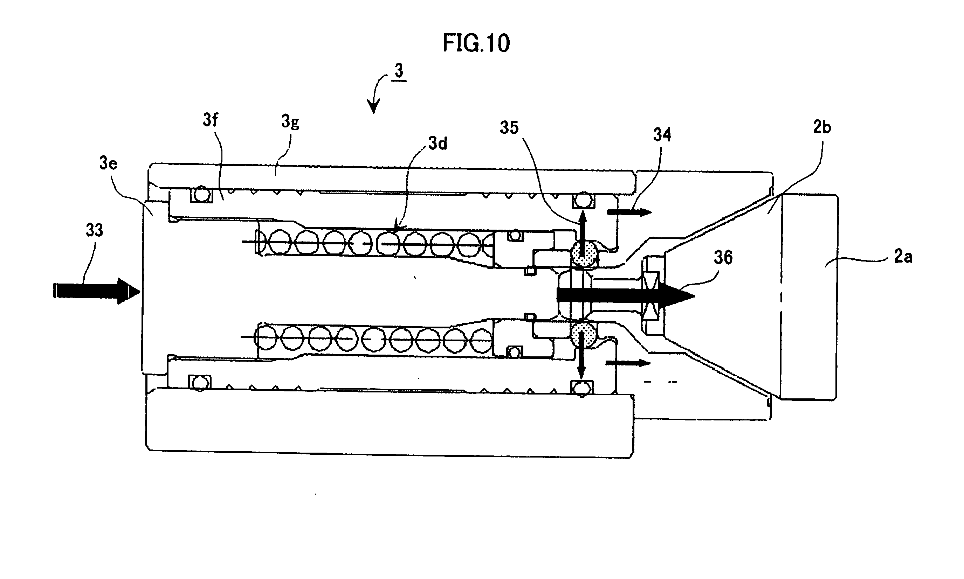

Next, a description is given of the unclamping action, using the flow chart shown in FIG. 5 and FIG. 10. Here, a description is given of an instance in which a workpiece-mounting pallet placed in a clamped state by the clamping action described above is unclamped.

The axis of the machine tool is driven, moving the work table 4. As illustrated by FIG. 2, when the work table 4 is moved, one end of the rotating levers 9 contacts the dogs 8a fixedly mounted on the saddle 8 and the rotating levers 9 rotate, pushing the rod 11 (Step S21).

The rod 11 moves the eject bar 3e in the direction of removal of the workpiece-mounting pallet, against the elastic force of the spring member (the direction indicated by arrow 33) (Step S22).

The sleeve 3f moves with the eject bar 3e and the eject bar 3e is brought in contact with the front end of the pull studs 2c Step S23). The eject bar 3e is further moved and to push the pull studs 2c in the direction of removal (Step S24).

At this time, by the movement of the sleeve 3f and the eject bar 3e in the direction of removal, the balls 3b are moved in a direction 35 away from the central axis to be retracted, thus widening the passageway through which the pull studs 2c pass upon removal, which had been narrowed by the balls 3b, and thereby allowing the pull studs 2c to be removed (Step S25).

The eject bar 3e is further moved to push the pull studs 2c out of the opening through which the pull studs are inserted and removed (indicated by arrow 36 in the diagram), unclamping the workpiece-mounting pallet (Step S26).

## Claims

1. A machine tool (10) comprising a work table (4), the machine tool (10) being cooperable with a pallet changer (1) for changing workpiece-mounting pallets (2A, 2B), such that a workpiece-mounting pallet (2A, 2B) can be conveyed from such pallet changer (1) to the work table (4) in the same plane as the work table (4), the work table (4) comprising:
supporting means (7) arranged for supporting a workpiece-mounting pallet (2A, 2B) in a direction of conveying a workpiece-mounting pallet (2A, 2B) to and from the work table (4); and
clamping means (3) for clamping and unclamping a workpiece-mounting pallet (2A, 2B) in the direction of conveying the workpiece-mounting pallet when supported by said supporting means (7);
**characterised in that** the clamping means (3) is such that a workpiece-mounting pallet can be unclamped from the work table (4) by utilizing a drive force of a driving mechanism, of the machine tool (10), provided for axially moving the work table (4).

2. A machine tool (10) according to claim 1, wherein said clamping means (3) is a clamping mechanism comprising:
a cylindrical case (3g);
a sleeve (3f) slidably supported in said cylindrical case (3g);
an eject bar (3e) arranged inside of said sleeve (3f) and movable with said sleeve (3f);
an elastic member (3d) generating an elastic force for urging said eject bar (3e) and said sleeve (3f) with respect to said cylindrical case (3g) in a direction of conveying a workpiece-mounting pallet (2A, 2D) to the work table (4) ; and
balls (3b) arranged movable radially of said cylindrical case (3g) to be in contact with an inner peripheral portion of said sleeve (3f);
wherein said sleeve (3f) slides in said cylindrical case (3g) by the elastic force of said elastic member (3d) such that said balls (3b) are moved radially inward of said cylindrical case (3g) to retain a pull stud (2c) provided on a workpiece-mounting pallet to be unmovable in the direction of conveying the workpiece-mounting pallet to/from the work table (4), whereby a workpiece-mounting pallet is clamped on the work table (4).

3. A machine tool (10) according to claim 2, wherein said clamping mechanism further comprises a drive mechanism for moving said eject bar (3e) with respect to said cylindrical case (3g) in a direction of conveying a workpiece-mounting pallet from the work table (4) by utilizing movement of the work table (4), wherein said drive mechanism is arranged to move said.eject bar (3e) to press the pull stud (2c) of the workpiece-mounting pallet in the direction of conveying the workpiece-mounting pallet from the work table (4) against the urging force of said elastic member (3d) so that the workpiece-mounting pallet is unclamped.

4. A machine tool (10) according to claim 2 or 3, wherein in said clamping mechanism said cylindrical case (3g) has a female taper (3a) with an inner diameter thereof increasing toward outside at one end for confronting the pull stud (2a) of a workpiece-mounting pallet so that a tapered cone (2b) having the pull stud (2a) at a distal end thereof can be fitted into said female taper (3a).

5. A machine tool (10) according to any preceding claim, when in operable combination with a pallet changer (1) as aforesaid.

## Patentansprüche

1. Werkzeugmaschine (10) mit einem Arbeitstisch (4), die mit einem Palettenwechsler (1) zum Wechseln von Werkstückmontagepaletten (2A, 2B) kooperieren kann, so dass eine Werkstückmontagepalette (2A, 2B) von einem Palettenwechsler (1) auf den Arbeitstisch (4) in der gleichen Ebene wie der Arbeitstisch (4) befördert werden kann, wobei der Arbeitstisch (4) umfasst:
eine Tragevorrichtung (7), welche die Werkstückmontagepalette (2A, 2B) in der Beförderungsrichtung einer Werkstückmontagepalette (2A, 2B) zu und von einem Arbeitstisch (4) trägt; und
eine Klemmvorrichtung (3) zum Festklemmen und Lösen einen Werkstückmontagepalette (2A, 2B) in Beförderungsrichtung der Werkstückmontagepalette, die von der Tragevorrichtung (7) getragen wird;
**dadurch gekennzeichnet, dass** die Klemmvorrichtung (3) derart ist, dass eine Werkstückmontagepalette von dem Arbeitstisch gelöst werden kann unter Nutzung einer Antriebskraft von einem Antriebsmechanismus der Werkzeugmaschine (10), der zur axialen Bewegung des Arbeitstischs (4) bereitgestellt wird.

2. Werkzeugmaschine (10) nach Anspruch 1, wobei die Klemmvorrichtung (3) ein Klemmmechanismus ist, umfassend:
ein zylindrisches Gehäuse (3g);
eine Hülse (3f), die in dem zylindrischen Gehäuse (3g) schiebbar gehalten wird;
einen Auswerfstab (3e), der im Inneren der Hülse (3f) angeordnet und mit der Hülse (3f) bewegbar ist;
ein elastisches Bauteil (3d), das eine elastische Kraft erzeugt, wodurch der Auswerfstab (3e) und die Hülse (3f) in Bezug auf das zylindrische Gehäuse (3g) in der Beförderungsrichtung einer Werkstückmontagepalette (2A, 2D) zu dem Arbeitstisch (4) gedrückt werden; und
Kugeln (3b), die derart angeordnet sind, dass sie radial zu dem zylindrischen Gehäuse (3g) bewegt werden können, so dass sie mit dem inneren Umfang der Hülse (3f) in Kontakt stehen,
wobei die Hülse (3f) in dem zylindrischen Gehäuse (3g) durch die elastische Kraft des elastischen Bauteils (3d) derart gleitet, dass die Kugeln radial einwärts des zylindrischen Gehäuses (3g) bewegt werden, wodurch ein Ziehansatz (2c) an einer Werkstückmontagepalette derart festgehalten wird, dass er in Beförderungsrichtung der Werkstückmontagepalette zu/vom dem Arbeitstisch (4) unbeweglich ist, wodurch eine Werkstückmontagepalette auf den Arbeitstisch (4) geklemmt wird.

3. Werkzeugmaschine nach Anspruch 2, wobei der Klemmmechanismus zudem einen Antriebsmechanismus umfasst zum Bewegen des Auswerfstabs (3e) in Bezug auf das zylindrische Gehäuse (3g) in der Beförderungsrichtung einer Werkstückmontagepalette von dem Arbeitstisch (4) unter Verwendung der Bewegung des Arbeitstisches (4), wobei der Antriebsmechanismus derart angebracht ist, dass er den Auswerfstab (3e) derart bewegt, dass der Ziehansatz (2c) der Werkstückmontagepalette in Beförderungsrichtung der Werkstückmontagepalette von dem Arbeitstisch (4) gegen die Drückrichtung des elastischen Bauteils (3d) gedrückt wird, so dass die Werkstückmontagepalette gelöst wird.

4. Werkzeugmaschine (10) nach Anspruch 2 oder 3, wobei in dem Klemmmechanismus das zylindrische Gehäuse (3g) einen Innenkonus (3a) aufweist, dessen Innendurchmesser zur Außenseite hin zunimmt an einem Ende, das dem Ziehansatz (2a) von einer Werkstückmontagepalette gegenüberliegt, so dass ein sich verjüngender Kegel (2b) an einem distalen Ende des Ziehansatzes (2a) in den Innenkonus (3a) eingepasst werden kann.

5. Werkzeugmaschine (10) nach einem vorhergehenden Anspruch in betriebsfähiger Kombination mit einem Palettenwechsler (1), wie vorstehend beschrieben.

## Revendications

1. Machine-outil (10) comprenant une table de travail (4), la machine d'outil (10) pouvant coopérer avec un changeur de palettes (1) pour changer des palettes de montage de pièces (2A, 2B) de telle sorte qu'une palette de montage de pièces (2A, 2B) peut être convoyée d'un tel changeur de palettes (1) à la table de travail (4) dans le même plan que la table de travail (4), la table de travail (4) comprenant :
un moyen de support (7) agencé pour supporter une palette de montage de pièces (2A, 2B) dans une direction de convoyage d'une palette de montage de pièces (2A, 2B) vers et de la table de travail (4) ;et
un moyen de serrage (3) pour serrer et desserrer une palette de montage de pièces (2A, 2B) dans la direction de convoyage de la palette de montage de pièces lorsqu'elle est supportée par ledit moyen de support (7) ;
**caractérisé en ce que** le moyen de serrage (3) est formé de façon qu'une palette de montage de pièces peut être desserrée de la table de travail (4) en utilisant une force d'entraînement d'un mécanisme d'entraînement de la machine-outil (10) prévue pour déplacer axialement la table de travail (4).

2. Machine-outil (10) selon la revendication 1, où ledit moyen de serrage (3) est un mécanisme de serrage comprenant :
un boîtier cylindrique (3g) ;
un manchon (3f) supporté d'une manière coulissante dans ledit boîtier cylindrique (3g) ;
une barre d'éjection (3e) agencée à l'intérieur dudit manchon (3f) et déplaçable avec ledit manchon (3f) ;
un élément élastique (3d) produisant une force élastique pour solliciter ladite part d'éjection (3e) et ledit manchon (3f) par rapport audit boîtier cylindrique (3g) dans une direction de convoyage d'une palette de montage de pièces (2A, 2D) à la table de travail (4) ; et
des billes (3b) agencées d'une manière déplaçable radialement dudit boîtier cylindrique (3g) pour être en contact avec une portion périphérique interne dudit manchon (3f) ;
où ledit manchon (3f) coulisse dans ledit boîtier cylindrique (3g) par la force élastique dudit élément élastique (3d) de telle sorte que lesdites billes (3b) sont déplacées radialement vers l'intérieur dudit boîtier cylindrique (3g) pour retenir une tige de traction (2c) réalisée sur une palette de montage de pièces pour qu'elles soient immobiles dans la direction de convoyage de la palette de montage de pièces vers/de la table de travail (4), par quoi une palette de montage de pièces est serrée sur la table de travail (4).

3. Machine-outil (10) selon la revendication 2, où ledit mécanisme de serrage comprend en outre un mécanisme d'entraînement pour déplacer ladite barre d'éjection (3e) par rapport audit boîtier cylindrique (3g) dans une direction de convoyage d'une palette de montage de pièces de la table de travail (4) en utilisant le mouvement de la table de travail (4) où ledit mécanisme d'entraînement est agencé pour déplacer ladite barre d'éjection (3e) pour presser la tige de traction (2c) de la palette de montage de pièces dans la direction de convoyage de la palette de montage de pièces de la table de travail (4) contre la force de sollicitation dudit élément élastique (3d) de sorte que la palette de montage de pièces est desserrée.

4. Machine-outil (10) selon la revendication 2 ou 3, où dans ledit mécanisme de serrage, ledit boîtier cylindrique (3g) présente une diminution femelle (3a) dont le diamètre interne augmente vers l'extérieur à une extrémité pour être confronté à la tige de traction (2a) d'une pièce de montage de palettes de façon qu'un cône diminué (2b) ayant la tige de traction (2a) à son extrémité distale puisse être insérée dans ladite diminution femelle (3a).

5. Machine-outil (10) selon l'une des revendications précédentes, en combinaison opérationnelle avec un changeur de palettes (1).
